# FASCICULE DE BREVET EUROPEEN

(11) **EP 1 755 936 B1**
(45) Date de publication et mention de la délivrance du brevet: **11.07.2007**
(21) Numéro de dépôt: 05746983.5
(22) Date de dépôt: 08.04.2005
(51) Int. Cl.: B62D 21/15

(54) **AGENCEMENT POUR ROUE DE SECOURS DANS UN VEHICULE AUTOMOBILE**
ANORDNUNG FÜR EIN ERSATZRAD BEI EINEM KRAFTFAHRZEUG
ARRANGEMENT FOR A SPARE WHEEL IN A MOTOR VEHICLE

(30) Priorité: 17.05.2004 FR 0450955
(43) Date de publication de la demande: 28.02.2007
(73) Titulaire: Renault SAS, 92100 Boulogne Billancourt (FR)
(72) Inventeur: HLUBINA, Thierry, F-92372 CHAVILLE (FR)
(86) Numéro de dépôt international: PCT/FR2005/050224
(87) Numéro de publication internationale: WO 2005/113319

(56) Documents cités:
- EP-A- 0 143 872
- EP-A- 0 816 209
- DE-A- 19 604 215
- FR-A- 2 067 958
- FR-A- 2 483 334

## Description

La présente invention concerne un agencement pour roue de secours d'un véhicule automobile et plus particulièrement un agencement dans lequel un élément solidaire de la structure du véhicule dirige, après un choc subi par le véhicule, la roue de secours dans une direction descendante afin d'éviter les sièges et/ou le réservoir du véhicule.

Un tel système vise à protéger les occupants du véhicule en empêchant la roue de secours, après une collision à l'arrière de ce véhicule, d'entrer en contact avec le réservoir d'essence ou le dossier des sièges arrières, par exemple.

Le document JP2002321642 décrit et représente un agencement pour roue de secours dans lequel un élément central est positionné entre les longerons arrière du véhicule et au dessus de la roue de secours, et dans lequel l'élément central est pré-déformé au dessus de la roue de secours, de sorte que lors d'un choc arrière, l'élément central s'affaisse sur la roue de secours et lui impose un mouvement vertical vers la route. L'efficacité d'un tel agencement lors d'un choc arrière dépend de la hauteur de l'impact. Ainsi, si l'élément central n'est pas contraint avant la roue de secours, du fait d'un choc situé très bas, celle-ci risque de venir percuter le réservoir ou les sièges arrière. Un risque différent est de voir l'élément central se déformer et entraîner le mouvement de la roue de secours, alors que la violence du choc n'était pas suffisante pour impacter la roue de secours, située en retrait de l'extrémité arrière de l'élément central. De plus, cette solution présente l'inconvénient de devoir prévoir une pièce supplémentaire dont la fonction principale est d'assurer l'évacuation de la roue de secours en cas de choc, cette pièce, qui doit être initialement pré-déformé, représentant un poids et un coût supplémentaires.

Un dispositif selon le préambule de la revendication 1 est décrit dans le document EP-A-143872.

Un des objectifs de l'invention est donc de proposer un agencement qui permette de diriger, à coup sur, la roue de secours dans une direction distincte de celle du réservoir ou des sièges arrière du véhicule.

En réponse à des objectifs que l'on retrouve invariablement chez les différents constructeurs automobiles, la présente invention se veut également peu coûteuse et peu encombrante.

Pour répondre à ces objectifs, l'invention propose un agencement pour roue de secours dans un véhicule automobile du type comportant une roue de secours située initialement sous le plancher du véhicule, à l'extérieur du véhicule et au dessus de l'essieu arrière du véhicule qui comprend au moins un élément transversal, dans lequel au moins un déflecteur solidaire de la structure du véhicule dirige, après un choc subi par le véhicule, la roue de secours dans une direction descendante afin d'éviter les sièges et/ou le réservoir du véhicule. Un déflecteur présente une partie inclinée qui tend à diriger la roue de secours vers l'élément transversal de l'essieu arrière, cet élément transversal étant situé entre la position initiale de la roue de secours et le réservoir, et
- un déflecteur est au contact de la roue de secours lorsque cette roue de secours est immobile.

Selon d'autres caractéristiques de l'invention:
- un deflecteur est soudé sous une traverse de l'unité arrière du véhicule et sous le plancher,
- un déflecteur présente une face orientée vers la roue de secours et inclinée longitudinalement, avec une pente descendante dirigée de l'arrière vers l'avant du véhicule pour diriger la roue de secours en cas de choc arrière vers le bas du véhicule,
- deux déflecteurs sont soudés sous une traverse de l'unité arrière et sous le plancher, et en ce que chaque déflecteur est au contact de la roue de secours lorsque cette roue de secours est immobile,
- chaque déflecteur présente une face orientée vers la roue de secours qui est d'une part inclinée longitudinalement, avec une pente descendante dirigée de l'arrière vers l'avant du véhicule pour diriger la roue de secours en cas de choc arrière vers le bas du véhicule, et d'autre part inclinée transversalement pour assurer un double appui pour la roue de secours lorsque celle-ci est immobile,
- un déflecteur est solidarisé à un levier prolongeant le réservoir sous ce déflecteur,
- la face des déflecteurs orientée vers la roue de secours est munie d'un orifice qui est fermé par un obturateur, et en ce que l'obturateur est logé dans une gorge formée autour de l'orifice, de sorte que la face d'appui des déflecteurs avec la roue de secours est plane.

L'invention protège également un véhicule automobile caractérisé en ce qu'il comporte un agencement pour roue de secours selon l'une des revendications précédentes, et en ce qu'il comporte un essieu souple formé d'au moins une traverse reliant deux bras longitudinaux.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'une unité arrière d'un véhicule automobile,
- la figure 2 est une vue de côté d'un agencement selon l'invention,
- la figure 3 est une représentation en perspective d'un mode de réalisation d'un déflecteur de l'agencement selon l'invention,
- la figure 4 est une vue de dessus d'un mode de réalisation de l'agencement selon l'invention, sans le plancher du véhicule.

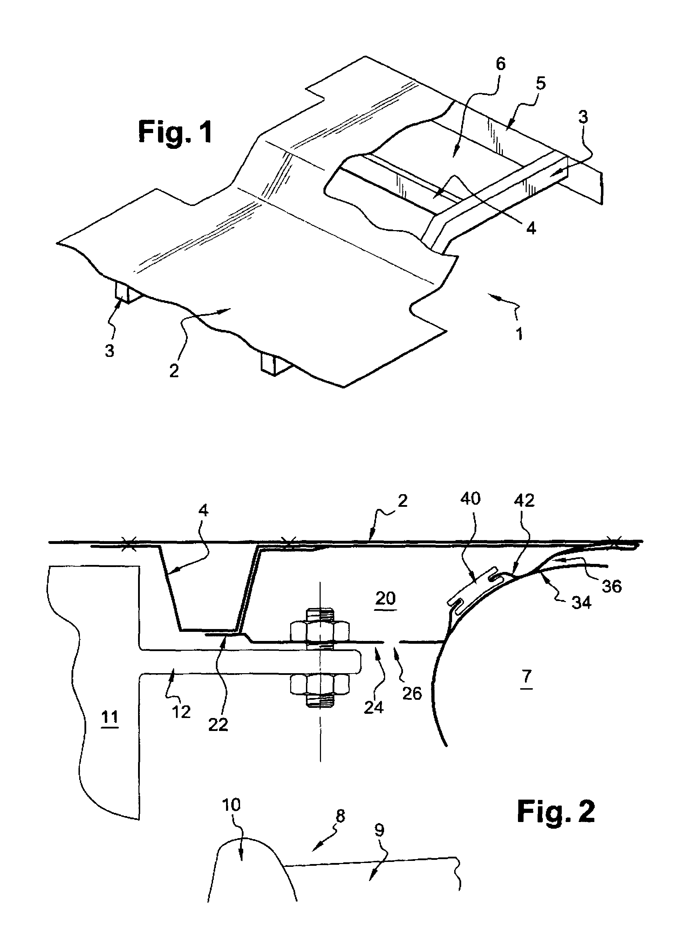

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

Telle que représentée à la figure 1, l'unité arrière 1 d'un véhicule automobile est formée d'un cadre sur lequel est fixé le plancher 2. Ce cadre 1 est composé de deux longerons 3 qui s'étendent sensiblement longitudinalement vers l'arrière du véhicule, ces longerons 3 étant reliés transversalement au véhicule par d'une part, une traverse centrale arrière 4, et d'autre part à leur extrémité arrière par une traverse extrême arrière 5. L'espace 6 formé ainsi à l'intérieur de ce cadre 1 sensiblement rectangulaire correspond sensiblement à la zone du coffre située au dessus du plancher 2, et à la position de la roue de secours 7 sous le véhicule.

Telle que représentée sur les figures 2 à 4, la roue de secours 7 est située sous le plancher 2 et en retrait de la traverse centrale arrière 4 sur laquelle le plancher 2 est soudé. Le fait que la roue de secours 7 soit placée à l'extérieur du véhicule, et non pas dans un panier solidaire du plancher 2, permet ainsi d'obtenir un véhicule dont le porte à faux arrière est très court. Toutefois, pour des raisons d'architecture, cette roue de secours 7 doit être positionnée suffisamment haut au dessus de l'essieu arrière 8 du véhicule pour ne pas gêner son débattement. Il sera compris que l'essieu arrière 8 peut être de différents types : pour l'exemple, l'essieu arrière 8 sera ici un essieu souple présentant une forme sensiblement « en H » avec deux bras longitudinaux 9 et un élément transversal 10.

Le réservoir d'essence 11 du véhicule est situé de façon connue sous le plancher 2, en avant de la traverse arrière centrale 4 et de l'essieu arrière 8 de sorte que la roue de secours 7 et le réservoir 11 sont séparés par cette traverse arrière centrale 4 et par l'élément transversal 10 de l'essieu arrière 8.

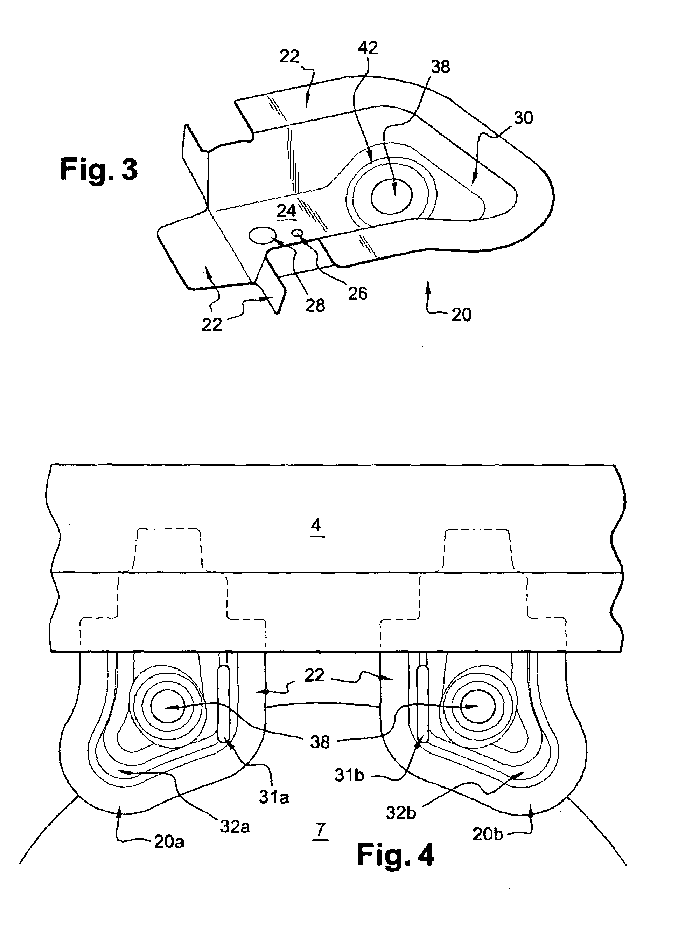

Selon l'invention, au moins un déflecteur 20 est soudé sur la traverse centrale arrière 4 et est orientée vers l'arrière du véhicule afin de réaliser au moins un point d'appui pour la roue de secours 7. Ce déflecteur 20 est formé d'un profilé s'étendant longitudinalement et de section sensiblement rectangulaire. Ce profilé peut être une pièce fermée étanche ou peut présenter, selon un mode de réalisation tel que représenté figures 3 et 4, un côté ouvert vers l'avant du véhicule et vers la traverse centrale arrière 4 pour présenter des feuillures 22 de fixation apte à permettre le soudage du déflecteur 20 avec la traverse centrale arrière 4. De même, la partie supérieure du déflecteur 20 peut présenter un côté ouvert pour présenter des feuillures 22 de fixation apte à assurer le soudage du déflecteur 20 avec le plancher.

La surface inférieure 24 du déflecteur 20 présente une surface sensiblement plane, dans laquelle sont formés un trou d'évacuation 26, par exemple afin d'éviter que les eaux de condensation stagnent à l'intérieur de la pièce, ainsi qu'un trou 28 pour permettre le passage d'un élément de fixation apte à solidariser le déflecteur 20 à un levier 12 prolongeant par exemple le réservoir 11. Cette surface inférieure 24 fait le lien entre les feuillures 22 de fixation à la traverse centrale arrière 4, qui sont orientées vers l'avant du véhicule, et la forme incliné 30 de l'extrémité du déflecteur 20 orientée vers l'arrière du véhicule.

La forme inclinée de cette extrémité 30 est optimisée pour assurer d'une part, un appui de la roue de secours 7 lors et après la mise en position de cette roue de secours 7, et d'autre part un guidage pour diriger la roue de secours 7 en cas de choc arrière de sorte que cette roue de secours 7 n'entre en contact ni avec les sièges arrière, ni avec le réservoir 11.

Avantageusement, deux déflecteurs 20a et 20b sont soudés sur la traverse centrale arrière. Ces déflecteurs 20 sont symétriques par rapport à un plan vertical qui comprend un axe longitudinal passant par le centre la roue de secours 7. Le déflecteur gauche 20a, c'est à dire celui qui se trouve à gauche du plan vertical défini plus haut lorsque l'on regarde l'ensemble depuis l'arrière du véhicule, présente une extrémité 30 incliné transversalement de sorte que le côté 31a de l'extrémité situé vers l'intérieur du véhicule et vers le déflecteur droit 20b est plus en avant par rapport au véhicule que le côté 32a de l'extrémité situé vers l'extérieur du véhicule. Le déflecteur 20b, c'est à dire celui qui se trouve à droite du plan vertical défini plus haut lorsque l'on regarde l'ensemble depuis l'arrière du véhicule, présente une extrémité 30 incliné transversalement de sorte que le côté 31b de l'extrémité situé vers l'intérieur du véhicule et vers le déflecteur gauche 20a est plus en avant par rapport au véhicule que le côté 32b de l'extrémité situé vers l'extérieur du véhicule. De fait, les faces d'appui 34 des déflecteurs, sur lesquelles est appuyée la roue de secours 7, sont orientées sensiblement l'une vers l'autre afin d'assurer un meilleur appui de cette roue de secours 7.

L'extrémité 30 de chaque déflecteur présente, en plus de l'inclinaison transversale, une forme inclinée longitudinalement 36 avec une pente descendante dirigée de l'arrière vers l'avant du véhicule pour diriger la roue de secours 7 en cas de choc arrière vers le bas du véhicule. L'inclinaison longitudinale 36 de l'extrémité 30 du déflecteur est calculée de sorte que la roue de secours 7 est dirigée sur l'élément transversal 10 de l'essieu arrière 8. De même, la position et l'épaisseur du levier 12 prolongeant le réservoir 11 sont optimisées pour permettre une bonne fixation du déflecteur 20 par rapport au réservoir, sans que ce levier 12 entrave, en cas de choc, la trajectoire de la roue de secours 7. En cas de choc suffisamment important pour déplacer la roue de secours 7 sur une grande distance, la roue de secours 7 entre alors en contact avec cet élément transversal 10 et l'énergie développée par le choc est ainsi absorbée par la structure du train. Un jeu initial laissé entre le réservoir 11 et l'élément transversal 10 de l'essieu arrière 8 autorise un mouvement de cet essieu 8 sous la force du choc, de sorte que l'absorption d'énergie du choc est possible sans que le réservoir 11 soit impacté et sans qu'il risque d'être percé.

Tel que représenté à la figure 3, un déflecteur est muni d'un orifice 38 permettant l'injection de cire pour l'étanchéité et le traitement anticorrosion. Cet orifice 38 situé dans la partie inclinée 30 du déflecteur, permet le passage d'une buse d'injection de cire, préalablement au montage de la roue de secours 7 sous le véhicule, et après le soudage de la pièce sous la traverse centrale arrière 4 et sous le plancher 2. Un obturateur 40 adapté à l'orifice 38 permet de rendre étanche le déflecteur après cette injection de cire. Une gorge 42 est réalisée dans la face d'appui 34 du déflecteur 20 pour la roue de secours 7, autour de l'orifice 38, de sorte que l'obturateur 40 ne dépasse pas de la face d'appui 34, et de sorte qu'il ne gêne pas le déplacement, lors d'un choc arrière, de la roue de secours 7 le long de la face incliné longitudinalement du déflecteur.

## Revendications

1. Agencement pour roue de secours (7) dans un véhicule automobile du type comportant une roue de secours (7) située initialement sous le plancher (2) du véhicule, à l'extérieur du véhicule et au dessus de l'essieu arrière (8) du véhicule qui comprend au moins un élément transversal (10), dans lequel au moins un déflecteur (20) solidaire de la structure du véhicule dirige, après un choc subi par le véhicule, la roue de secours (7) dans une direction descendante afin d'éviter les sièges et/ou le réservoir (11) du véhicule, le au moins un déflecteur (20) présentant une partie inclinée (30) qui tend à diriger la roue de secours (7) vers l'élément transversal (10) de l'essieu arrière (8), cet élément transversal (10) étant situé entre la position initiale de la roue de secours (7) et le réservoir (11), **caractérisé en ce qu'**au moins un déflecteur (20) est au contact de la roue de secours (7) lorsque cette roue de secours (7) est immobile.

2. Agencement selon la revendication 1, **caractérisé en ce qu'**au moins un déflecteur (20) est soudé sous une traverse (4) de l'unité arrière (1) du véhicule et sous le plancher (2).

3. Agencement selon l'une des revendications 1 ou 2, **caractérisé en ce qu'**au moins un déflecteur (20) présente une face orientée vers la roue de secours (7) et inclinée longitudinalement (36), avec une pente descendante dirigée de l'arrière vers l'avant du véhicule pour diriger la roue de secours (7) en cas de choc arrière vers le bas du véhicule.

4. Agencement selon la revendication 1 ou 2, **caractérisé en ce que** deux déflecteurs (20a, 20b) sont soudés sous une traverse (4) de l'unité arrière (1) et sous le plancher (2), et **en ce que** chaque déflecteur (20a, 20b) est au contact de la roue de secours (7) lorsque cette roue de secours (7) est immobile.

5. Agencement selon la revendication 4, **caractérisé en ce que** chaque déflecteur (20a, 20b) présente une face (34) orientée vers la roue de secours (7) qui est d'une part inclinée longitudinalement (36), avec une pente descendante dirigée de l'arrière vers l'avant du véhicule pour diriger la roue de secours (7) en cas de choc arrière vers le bas du véhicule, et d'autre part inclinée transversalement pour assurer un double appui pour la roue de secours (7) lorsque celle-ci est immobile.

6. Agencement selon l'une des revendications précédentes, **caractérisé en ce qu'**au moins un déflecteur (20) est solidarisé à un levier (12) prolongeant le réservoir (11) sous ce déflecteur (20).

7. Agencement selon la revendication précédente, **caractérisé en ce que** la face (34) d'au moins un déflecteur orientée vers la roue de secours (7) est munie d'un orifice (38) qui est fermé par un obturateur (40), et **en ce que** l'obturateur (40) est logé dans une gorge (42) formée autour de l'orifice, de sorte que la face d'appui (34) des déflecteurs (20) avec la roue de secours (7) est plane.

8. Véhicule automobile **caractérisé en ce qu'**il comporte un agencement pour roue de secours (7) selon l'une des revendications précédentes, et **en ce qu'**il comporte un essieu souple formé d'au moins une traverse (4) reliant deux bras longitudinaux (3).

## Claims

1. Arrangement for a spare wheel (7) in a motor vehicle of the type comprising a spare wheel (7) located initially under the floor (2) of the vehicle, on the outside of the vehicle and above the rear axle (8) of the vehicle which comprises at least one transverse element (10), in which at least one deflector (20) fixed to the structure of the vehicle, after an impact sustained by the vehicle, guides the spare wheel (7) in a downward direction in order to avoid the seats and/or the tank (11) of the vehicle, the at least one deflector (20) having an inclined part (30) tending to guide the spare wheel (7) towards the transverse element (10) of the rear axle (8), this transverse element (10) being located between the initial position of the spare wheel (7) and the tank (11), **characterized in that** at least one deflector (20) is in contact with the spare wheel (7) when this spare wheel (7) is immobile.

2. Arrangement according to Claim 1, **characterized in that** at least one deflector (20) is welded under a cross-member (4) of the rear unit (1) of the vehicle and under the floor (2).

3. Arrangement according to either of Claims 1 and 2, **characterized in that** at least one deflector (20) has one face oriented towards the spare wheel (7) and inclined longitudinally (36), with a downward slope directed from the rear towards the front of the vehicle in order to guide the spare wheel (7), in the event of rear impact, towards the bottom of the vehicle.

4. Arrangement according to Claim 1 or 2, **characterized in that** two deflectors (20a, 20b) are welded under a cross-member (4) of the rear unit (1) and under the floor (2), and **in that** each deflector (20a, 20b) is in contact with the spare wheel (7) when this spare wheel (7) is immobile.

5. Arrangement according to Claim 4, **characterized in that** each deflector (20a, 20b) has one face (34) oriented towards the spare wheel (7) which is, on the one hand, inclined longitudinally (36), with a downward slope directed from the rear towards the front of the vehicle in order to guide the spare wheel (7), in the event of rear impact, towards the bottom of the vehicle, and, on the other hand, inclined transversely to ensure a double support for the spare wheel (7) when said spare wheel is immobile.

6. Arrangement according to one of the preceding claims, **characterized in that** at least one deflector (20) is fixed to an arm (12) extending the tank (11) under this deflector (20).

7. Arrangement according to the preceding claim, **characterized in that** the face (34) of at least one deflector oriented towards the spare wheel (7) is provided with an orifice (38) which is closed by a seal (40) and **in that** the seal (40) is housed in a recess (42) formed around the orifice, such that the support face (34) of the deflectors (20) is planar with the spare wheel (7).

8. Motor vehicle **characterized in that** it comprises an arrangement for a spare wheel (7) according to one of the preceding claims, and **in that** it comprises a flexible axle formed from at least one cross-member (4) connecting two longitudinal arms (3).

## Patentansprüche

1. Anordnung für ein Ersatzrad (7) bei einem Kraftfahrzeug, umfassend ein Ersatzrad (7), welches anfangs unter dem Fahrzeugboden (2), außerhalb des Fahrzeugs und über der Fahrzeughinterachse (8), angeordnet ist, welche mindestens ein Querelement (10) umfasst, in dem mindestens ein mit der Fahrzeugstruktur einstückiger Deflektor (20) nach einem von dem Fahrzeug erfahrenen Aufprall das Ersatzrad (7) in eine absteigende Richtung lenkt, um den Sitzen und/oder dem Tank (11) des Fahrzeugs auszuweichen, wobei der mindestens eine Deflektor (20) einen geneigten Teil (30) aufweist, der das Ersatzrad (7) tendenziell in Richtung auf das Querelement (10) der Hinterachse (8) richtet, wobei dieses Querelement (10) zwischen der Anfangsposition des Ersatzrads (7) und dem Tank angeordnet ist, **dadurch gekennzeichnet, dass** mindestens ein Deflektor (20) mit dem Ersatzrad (7) in Kontakt ist, wenn das Ersatzrad (7) unbeweglich ist.

2. Anordnung nach Anspruch 1, **dadurch gekennzeichnet, dass** mindestens ein Deflektor (20) unter einer Querstrebe (4) der Heckeinheit (1) des Fahrzeugs und unter dem Boden (2) angeschweißt ist.

3. Anordnung nach einem der Ansprüche 1 oder 2, **dadurch gekennzeichnet, dass** mindestens ein Deflektor (20) eine zu dem Ersatzrad (7) gerichtete und in Längsrichtung geneigte Fläche mit einer abfallenden Neigung aufweist, welche vom Fahrzeugheck zum Fahrzeugbug gerichtet ist, um das Ersatzrad (7) im Fall eines Aufpralls von hinten gegen das Untere des Fahrzeugs zu leiten.

4. Anordnung nach Anspruch 1 oder 2, **dadurch gekennzeichnet, dass** zwei Deflektoren (20a, 20b) unter einer Querstrebe (4) der Heckeinheit (1) und unter dem Boden (2) angeschweißt sind, und dass sich jeder Deflektor (20a, 20b) in Kontakt mit dem Ersatzrad (7) befindet, wenn dieses Ersatzrad (7) unbeweglich ist.

5. Anordnung nach Anspruch 4, **dadurch gekennzeichnet, dass** jeder Deflektor (20a, 20b) eine zu dem Ersatzrad (7) gerichtete Fläche (34) aufweist, die einerseits mit einer von Fahrzeugheck zum Fahrzeugbug gerichteten abfallenden Neigung in Längsrichtung (36) geneigt ist, um das Ersatzrad (7) im Fall eines Aufpralls von hinten gegen das Untere des Fahrzeugs zu leiten, und andererseits in Querrichtung geneigt ist, um eine doppelte Auflage für das Ersatzrad (7) zu bieten, wenn dieses unbeweglich ist.

6. Anordnung nach einem der vorhergehenden Ansprüche, **dadurch gekennzeichnet, dass** mindestens ein Deflektor (20) mit einem den Tank (11) verlängernden Hebel (12) unter dem Deflektor (20) verbunden ist.

7. Anordnung nach dem vorhergehenden Anspruch, **dadurch gekennzeichnet, dass** die in Richtung auf das Ersatzrad (7) gerichtete Fläche (34) des mindestens einen Deflektors mit einer Öffnung (38) versehen ist, welche mit einer Blende (40) verschlossen ist, und dass die Blende (40) in einer um die Öffnung gebildeten Kehle (42) aufgenommen wird, so dass die Anlagefläche (34) der Deflektoren (20) an dem Ersatzrad (7) eben ist.

8. Kraftfahrzeug, **dadurch gekennzeichnet, dass** es eine Anordnung für ein Ersatzrad (7) nach einem der vorhergehenden Ansprüche umfasst, und dass es eine drehbare Hinterachse umfasst, welche aus mindestens einer zwei Längsarme (3) verbindenden Querstrebe (4) besteht.
